# EUROPÄISCHE PATENTANMELDUNG

(11) **EP 1 712 402 A1**
(43) Veröffentlichungstag der Anmeldung: **18.10.2006**
(21) Anmeldenummer: 06090042.0
(22) Anmeldetag: 29.03.2006
(51) Int. Cl.: B60M 1/28, H02G 1/02

(54) **Anordnung zur optischen Warnung vor Fahrdrähten**

(30) Priorität: 12.04.2005 DE 202005006130 U
(71) Anmelder: FASYS Bauservice GmbH, 30159 Hannover (DE)
(72) Erfinder: Schulze, Thomas, 30173 Hannover (DE)
(74) Vertreter: Effert, Bressel und Kollegen

(57) **Zusammenfassung**

Die Erfindung betrifft eine Anordnung zur optischen Warnung vor Fahrdrähten, umfassend a) ein Lichtsystem (1) zum Anzeigen der Position und/oder des Betriebszustandes der Fahrdrähte (7), b) mindestens ein Befestigungsmittel für das Lichtsystem (1), c) eine Steuerzentrale zum Ansteuern des Lichtsystems und Überwachen des Betriebszustandes der Fahrdrähte (7) und d) eine Stromversorgungseinheit, dadurch gekennzeichnet, dass das mindestens eine Befestigungsmittel erste Halteelemente (2) zum Halten des Lichtsystems (1) und zweite Halteelemente (3, 3'), über die die Anordnung mit den Fahrdrähten (7) oder mit den Fahrdrähten (7) zugeordneten Tragseilen (10) oder Richtseilen (11, 12) lösbar verbunden werden kann, umfasst.

## Beschreibung

Die vorliegende Erfindung betrifft eine Anordnung zur optischen Warnung vor Fahrdrähten, beispielsweise Fahrdrähten zum Betrieb von Bahnen, Oberleitungsbussen oder Straßenbahnen.

Bei der Elektrifizierung von Gleisabschnitten zum Betrieb von Bahnen, Oberleitungsbussen oder Straßenbahnen werden unter anderem Oberleitungsanlagen verwendet. Die Oberleitungsanlagen umfassen verschiedene Bestandteile, wie z.B. die Oberleitung, welche mindestens den Fahrdraht umfasst, Oberleitungstragmasten und verschiedene weitere Konstruktionselemente, wie z.B. Isolatoren zum Anbringen der Oberleitung an die Tragmasten.
Dabei kann die Oberleitung je nach Ausführung außer dem Fahrdraht, welcher zur Übertragung des Stroms an eine E-Lok dient, aus einem dem Fahrdraht zugeordneten Tragseil, z.B. einem Quertragseil oder Längstragseil, sowie Richtseilen, z.B. oberen und unteren Richtseilen, aufgebaut sein. Dabei kann in einem Fall das Quertragseil quer zum Fahrdraht zwischen zwei Oberleitungstragmasten angeordnet (gespannt) sein, wobei das Quertragseil den Fahrdraht dann über das Verbindungsseil und obere und/oder untere Richtseile zwischen zwei Oberleitungstragmasten hält. Zusätzlich kann in Richtung des Fahrdrahtes zusätzlich ein Längstragseil vorhanden sein, welches den Fahrdraht über Verbindungsseile parallel zu den Gleisen hält. Das Längstragseil wird dann an den Stellen, an denen sich die Oberleitungstragmasten befinden, beispielsweise über Quertragseile mit Verbindungsseilen und gegebenenfalls Richtseilen mit den Oberleitungstragmasten verbunden und so gehalten.

Bei der Errichtung dieser elektrifizierten Bahngleise und auch bei der Wartung solcher Gleise ist es sowohl auf freier Strecke als auch beispielsweise in mehrgleisigen Bahnhofbereichen oftmals erforderlich, in der Nähe von spannungsführenden Fahrdrähten beispielsweise mit Baggern oder Kranen zu arbeiten. Dabei ist besondere Vorsicht geboten. So kann zum einen die Berührung der spannungsführenden Fahrdrähte zu deren Beschädigung und damit zu erheblichen Störungen beim Bahnbetrieb und möglicherweise großen finanziellen Schäden führen. Zum anderen kann eine Berührung der spannungsführenden Fahrdrähte zu schweren gesundheitlichen Beeinträchtigungen oder gar zum Tod führen.

Um derartige Probleme zu vermeiden, werden solche Arbeiten immer unter dem Druck einer erhöhten Aufmerksamkeit durchgeführt. Daneben sind die Arbeiten von einem permanenten Leistungsdruck begleitet, welcher auf Grund hoher Produktivitätsvorgaben mit entsprechend kurzen Bau- und Wartungszeiten entsteht. Dabei werden die Arbeiten häufig auch in der Nacht bei zum Teil eingeschränkten Sichtverhältnissen oder ungünstigen Witterungsbedingungen durchgeführt, was die oben beschriebene Problematik weiter verschärft.

Zur Erhöhung der Personensicherheit bei Arbeiten in der Nähe von Fahrdrähten muss daher eine Reihe von zwingenden Regelungen und Richtlinien beachtet werden.

Um die Sicherheit der in der Nähe von Fahrdrähten arbeitenden Personen weiter zu verbessern, werden neben den geltenden Regelungen und Richtlinien zusätzlich auch optische und akustische Warnsysteme eingesetzt.

So wird von Bolla und Heggli (Bolla, M. und Heggli, J.: "Optische Warnung vor spannungsführender Oberleitung", eb (2004) 102(7): 302-04) ein stationäres Warnsystem vor spannungsführenden Oberleitungen, d.h. vor den spannungsführenden Fahrdrähten, für Werkstätten von Bahnen und Straßenbahnen beschrieben. Das Warnsystem wird verwendet, um in solchen Werkstätten vor häufig wechselnden Betriebszuständen der Fahrdrähte durch Ein- und Ausschalten auf Grund häufiger Fahrzeugein- und -ausfahrten zu warnen. Zum Betreiben solcher Werkstätten gibt es eine Reihe von Richtlinien der DB Netz AG für den Gebrauch von Oberleitungsanlagen in Werkstätten und im Depot. Danach darf in Werkstätten in der Nähe der Oberleitung, welche den Fahrdraht umfasst, an elektrischen Ausrüstungen auf Vorbauten oder Dächern von Schienenfahrzeugen nur gearbeitet werden, wenn die Oberleitung ausgeschaltet, geerdet und der Ausschalter gegen ungewolltes Einschalten verriegelt ist. Zur Unterstützung dieser Richtlinien wird der Betriebszustand durch eine zusätzliche akustische oder optische Signalisierung einzelner Oberleitungsabschnitte mittels Lichtschlangen oberhalb der Oberleitungen angezeigt. Dabei wird beispielsweise vorgeschlagen, stromlose Oberleitungsabschnitte mit abschnittsweise leuchtenden oder ausgeschalteten Lichtschlangen zu kennzeichnen. Das System wird in die vorhandenen Sicherheitsanlagen und die entsprechenden Sicherheitsprotokolle integriert. Zusätzlich zu der Lichtschlange ist dazu ein komplexes Steuergerät vorhanden, welches das Lauflichtsignal erzeugt und verschiedene Überwachungs- und Steuerfunktionen übernimmt.

Derartige fest installierte Systeme sind gut geeignet für Arbeiten in den beschriebenen Werkstätten, in denen festgelegte Arbeiten unabhängig von Tageszeit oder Witterungsbedingungen in der immer gleichen Umgebung und unter immer gleichen Bedingungen durchgeführt werden. Sie sind jedoch sehr unflexibel und aufwändig und daher für den Einsatz außerhalb dieser Werkstätten nicht geeignet.

An die Verwendung von nicht fest installierten Warnsystemen zur Sicherung von Fahrdrähten bei Arbeiten außerhalb von Werkstätten werden jedoch andere Anforderungen gestellt, welche von denen in Werkstätten abweichen.

So geht es in erster Linie darum, die Fahrdrähte unabhängig davon, ob sie spannungsführend sind oder nicht, besser sichtbar zu machen, um sie vor Beschädigungen bei Arbeiten mit schweren Arbeitsgeräten, beispielsweise Kranen, zu schützen. Daneben sollen auch die in der Nähe der Fahrdrähte arbeitenden Personen vor den Fahrdrähten gewarnt werden, da die Fahrdrähte nicht in jedem Fall abgeschaltet werden. Weiterhin werden Warnanlagen im Freien darüber hinaus auch nicht fest installiert, sondern je nach Bautätigkeit in den entsprechenden Bauabschnitten angebracht. Sie müssen daher einfach auf- und abzubauen sein, so dass sie leicht wieder für Zugdurchfahrten zu entfernen sind, da sie nach der Installation den Bahnbetrieb behindern würden. Dadurch werden Verzögerungen im Bahnverkehr, welche ohnehin durch die Bau- und Wartungstätigkeit auftreten, nicht weiter unnötig ausgedehnt.

Somit besteht die Aufgabe der vorliegenden Erfindung darin, eine Anordnung zur optischen Warnung vor Fahrdrähten, beispielsweise Fahrdrähten zum Betrieb von Bahnen, Oberleitungsbussen oder Straßenbahnen, zur Vermeidung von Beschädigung und/oder unbeabsichtigter Berührung dieser Fahrdrähte, beispielsweise bei Bau- oder Wartungsarbeiten im Bereich von Fahrdrähten, bereitzustellen, welche mobil, flexibel, schnell und einfach auf- und abzubauen ist. Diese Anordnung soll auch geeignet sein, bei sich verändernden Umweltbedingungen, wie z.B. aufkommendem Regen und Wind, störungsfrei zu arbeiten.

Die Aufgabe wird gelöst durch die Anordnung nach Anspruch 1. Bevorzugte Ausführungsformen der Erfindung sind in den Unteransprüchen angegeben.

Die Anordnung dient zur Warnung vor Fahrdrähten auf Bahnbaustellen, beispielsweise auf Gleisbaustellen oder in mehrgleisigen Bahnhofsbereichen, zur Vermeidung von Beschädigung, welche beispielsweise beim Arbeiten mit Großgeräten, wie Baggern oder Kranen, durch eine unbeabsichtigte Berührung der Fahrdrähte vorkommen können.

Neben der verbesserten Wahrnehmung der Fahrdrähte zu deren Schutze kann die Anordnung auch dazu verwendet werden, den Betriebszustand des Fahrdrahtes anzuzeigen. Dadurch kann die Warnfunktion der Anordnung zusätzlich oder alternativ auch dazu genutzt werden, vor einer lebensbedrohlichen Verletzungsgefahr durch eine unbeabsichtigte Berührung dieser Fahrdrähte zu warnen. Dieses ist beispielsweise dann besonders wichtig, wenn in der Nähe der Fahrdrähte gearbeitet wird und diese Arbeiten sowohl bei ausgeschalteter Oberleitung, d.h. wenn der Fahrdraht spannungslos ist, als auch bei eingeschalteter Oberleitung durchgeführt werden.

Die erfindungsgemäße Anordnung ist flexibel einsetzbar, leicht zu transportieren und einfach und schnell auf- und abzubauen. Dabei kann sie auch bei starkem Wind und Regen verwendet werden, wobei beispielsweise auch ein zu starkes Schwingen und Durchhängen des Lichtsystems vermieden werden kann. Somit ist die Anordnung gerade für die Anwendung in so genannten Wanderbaustellen bestens geeignet. Daneben können eine verringerte Schadensrate bei Arbeiten im Bereich des Fahrdrahtes sowie die Möglichkeit der schnellen Montage bzw. Demontage infolge des Gebrauchs der mobil verwendbaren Anordnung helfen, Kosten und Zeit zu sparen und die Betriebspünktlichkeit der Bahnen zu erhöhen.

Die Anordnung umfasst:
a) ein Lichtsystem zum Anzeigen der Position und/oder des Betriebszustandes der Fahrdrähte,
b) mindestens ein Befestigungsmittel für das Lichtsystem,
c) eine Steuerzentrale zum Ansteuern des Lichtsystems und gegebenenfalls Überwachen des Betriebszustandes der Fahrdrähte und
d) eine Stromversorgungseinheit,
wobei das mindestens eine Befestigungsmittel erste Halteelemente zum Halten des Lichtsystems und zweite Halteelemente, über die die Anordnung mit den Fahrdrähten oder mit den Fahrdrähten zugeordneten Tragseilen oder Richtseilen lösbar verbunden werden kann, umfasst.

Ein schneller Auf- und Abbau der erfindungsgemäßen Anordnung wird dabei durch die zweiten Halteelemente des mindestens einen Befestigungsmittels bewirkt, über welche die Anordnung mit den Fahrdrähten oder mit den den Fahrdrähten zugeordneten Trag- oder Richtseilen einfach und unkompliziert lösbar verbunden werden kann. Einfach und unkompliziert lösbar im Sinne der vorliegenden Erfindung bedeutet, dass die Anordnung über die zweiten Halteelemente mit dem Fahrdraht oder dem Trag- oder Richtseil derart verbunden wird, dass zum Anbringen der zweiten Halteelemente an dem oder zum Lösen dieser zweiten Halteelemente vom Fahrdraht oder Trag- oder Richtseil keine Berührung der zweiten Halteelemente und/oder des Fahrdrahtes oder des Trag- oder Richtseils durch Menschen aus unmittelbarer Nähe nötig ist. Dieses wäre dagegen beispielsweise dann notwendig, wenn die Anordnung mit dem Fahrdraht beispielsweise mit Mitteln, wie Steck- oder Schraubverbindern oder Karabinerverschlusssystemen, verbunden wäre. Erfindungsgemäß ist es vielmehr möglich, die Anordnung aus der Entfernung, beispielsweise vom Boden oder von einem Kran aus, an den Fahrdraht oder das Trag- oder Richtseil anzubringen oder von diesem zu lösen. Insbesondere ist dies selbst dann möglich, wenn der Fahrdraht spannungsführend ist.

Die erfindungsgemäße Anordnung kann in verschiedenen Varianten an den Fahrdrähten oder an den den Fahrdrähten zugeordneten Trag- oder Richtseilen angebracht werden. So kann die Anordnung beispielsweise parallel zum Fahrdraht angebracht werden, wobei sie dann vorzugsweise am Fahrdraht oder unmittelbar über dem Fahrdraht befestigt wird. Bei parallel zueinander verlaufenden Fahrdrähten, beispielsweise in mehrgleisigen Bahnhofsbereichen, kann die Anordnung auch quer zur Richtung der Fahrdrähte verlaufen und mit den Fahrdrähten oder mit den Trag- oder Richtseilen verbunden werden. Vorzugsweise wird die erfindungsgemäße Anordnung in diesem Fall an den Richtseilen befestigt. Besonders bevorzugt ist es, wenn die Anordnung dabei an den oberen Richtseilen befestigt wird. Dadurch ist es möglich, dass der Zugbetrieb, wenn auch mit verminderter Geschwindigkeit, sogar aufrechterhalten werden kann, ohne dass die erfindungsgemäße Anordnung für eine Zugdurchfahrt demontiert werden muss. Dadurch können Verzögerungen im Zugbetrieb reduziert und Zeit und somit Kosten bei den notwendigen Arbeiten eingespart werden.

Gegebenenfalls kann die Anordnung bei entsprechender Länge sowohl quer als auch parallel zum Fahrdraht angeordnet und mit diesem verbunden werden, wobei die Anordnung in diesem Fall beispielsweise zunächst quer zu den Fahrdrähten in einer Richtung, dann über eine bestimmte Strecke parallel zu einem Fahrdraht und schließlich, in die entgegen gesetzte Richtung wieder zurück, quer zu den Fahrdrähten, angebracht wird. Die beschriebenen Varianten können beliebig variiert, kombiniert und wiederholt werden.

Vorzugsweise umfasst die Anordnung mehrere Befestigungsmittel. Die ersten Halteelemente sind vorzugsweise mit den zweiten Halteelementen verbunden. Hierzu können die ersten mit den zweiten Halteelementen beispielsweise einstückig ausgebildet oder nicht lösbar mit letzteren verbunden sein. Die ersten Halteelemente können aber auch mit den zweiten Halteelementen über ein Zwischenstück, beispielsweise über einen Ring, ein Steck-, Schraub- oder anderes Verbindungssystem, verbunden sein.

Die zweiten Halteelemente der Befestigungsmittel ermöglichen es durch ihre lösbare Ausgestaltung insbesondere, die Anordnungen bereits zu einem Zeitpunkt an dem Fahrdraht zu befestigen, zu dem der Fahrdraht noch spannungsführend ist. Dadurch kann die Zeit, in der der Gleisabschnitt gesperrt werden muss, effektiver genutzt werden, wodurch die Zeit für die Sperrung eines Gleisabschnitts insgesamt reduziert werden kann.

Die zweiten Halteelemente werden vorzugsweise ausschließlich formschlüssig am Fahrdraht oder an den Trag- oder Richtseilen befestigt. Alternativ hierzu können die zweiten Halteelemente auch ausschließlich kraftschlüssig oder sowohl formschlüssig als auch kraftschlüssig befestigt werden. Hierzu können übliche Verbindungstechniken, wie Schnapp-, Rast- oder Klemmverbindungen in Frage.

Die zweiten Halteelemente des Befestigungselementes sind vorzugsweise als Haken ausgebildet, welche aus einem nicht leitenden Material bestehen oder mit einem solchen Material isoliert sind. Die Haken ermöglichen es, die Anordnung schnell und einfach an den Fahrdrähten oder an den den Fahrdrähten zugeordneten Trag- oder Richtseilen zu befestigen und von diesen wieder abzunehmen.

Die Haken können so ausgebildet sein, dass sie einen gebogenen Teil zum Aufnehmen des Fahrdrahtes oder des Trag- oder Richtseils aufweisen. Vorzugsweise ist der gebogene Teil im Wesentlichen V-förmig ausgebildet, wobei die Spitze des "V" wie bei einem Hausdach während der bestimmungsgemäßen Verwendung nach oben gerichtet ist. Im Wesentlichen V-förmig bedeutet, dass die Spitze des "V" vorzugsweise nicht spitz sondern in etwa rundlich wie bei einem "U" verläuft, während die die Öffnung bildenden Schenkel des "V" einen Winkel > 0° und vorzugsweise > 90° zueinander bilden. Am freien Ende des einen Schenkels des dachförmig gebildeten "V" kann ein Steg angebracht sein, welcher an seinem dem "V" abgewandten (freien) Ende mit dem ersten Halteelement verbunden oder verbindbar ist. Der Steg kann mit dem "V" einstückig ausgebildet sein. Ein derartiger Steg ist vorzugsweise so an einem bei der Verwendung nach unten weisenden Schenkel des "V " vorgesehen, dass die ersten Haltemittel vorzugsweise etwa im Bereich der Winkelhalbierenden der Schenkel des "V" am Steg befestigt sind. Indem das erste Halteelement an dem Steg befestigt ist, ergibt sich eine Öffnung zwischen dem freien Ende des anderen Schenkels des "V" und der Stelle an der das erste Halteelement befestigt ist. Über diese Öffnung kann der Fahrdraht oder das Trag- oder Richtseil aufgenommen werden. Dadurch lässt sich der Haken leicht an den Fahrdraht oder das Trag- oder Richtseil anhängen, wobei der Fahrdraht oder das Trag- oder Richtseil sehr gut in den gebogenen Teil des Hakens passt. Anstelle einer "V"-Form kann das zweite Halteelement auch eine "U"-Form aufweisen.

Weiterhin kann das Ende des einen Schenkels des "V" oder "U", welcher nicht mit dem Steg verbunden ist, vorzugsweise etwas über den Querschnitt beispielsweise des Fahrdrahtes hinausragen. Dadurch kann ein ungewolltes Herausrutschen des Fahrdrahtes aus dem gebogenen Teil an den Enden der Haken vermieden werden.

Damit die Haken den Fahrdraht oder das Trag- oder Richtseil insbesondere dann, wenn die Anordnung durch Wind in Schwingungen gerät, nicht ohne weiteres freigeben, können die Schenkel des "V" oder "U" und der daran vorgesehene Steg vorzugsweise so zueinander ausgerichtet sein, dass die zwischen dem Steg und dem gegenüberliegenden Schenkel des "V" oder "U" freibleibende Öffnung geringfügig kleiner ist als der Durchmesser des Fahrdrahtes oder des Trag- oder Richtseils. Dadurch wird der Haken bei der Montage der erfindungsgemäßen Anordnung auf den Fahrdraht oder das Trag- oder Richtseil aufgerastet. Ein unbeabsichtigtes Lösen der Anordnung vom Fahrdraht oder Trag- oder Richtseil wird somit verhindert.

In Richtung des Lichtsystems gesehen aufeinander folgende Haken sind vorzugsweise so angeordnet, dass sie bezüglich der die Öffnung bildenden Seite zueinander entgegengesetzt ausgerichtet sind, so dass sie mit dem Fahrdraht oder dem Trag- oder Richtseil wechselseitig von der einen beziehungsweise von der anderen Seite aus verbindbar sind. Das hat den Vorteil, dass die Haken den Fahrdraht oder das Trag- oder Richtseil nicht durch unbeabsichtigtes Schaukeln, beispielsweise durch Wind, zufällig freigeben.

Die zweiten Halteelemente der Befestigungsmittel werden zum lösbaren Anbringen der Anordnung beispielsweise an den Fahrdraht vorzugsweise in einem Abstand von 2 - 5 m zueinander angebracht, besonders bevorzugt etwa 3 m, wobei ein geringer Abstand der Befestigungsmittel ein Durchhängen des Lichtsystems minimiert.

Vorzugsweise können den zweiten Halteelementen Montage-Hilfsmittel zugeordnet sein, wobei die Montage-Hilfsmittel zur Montage der zweiten Halteelemente der Anordnung beispielsweise an den Fahrdraht dienen. Dazu kann ein zweites Halteelement ein oder mehrere Montage-Hilfsmittel umfassen. Diese Montage-Hilfsmittel können beispielsweise als große Montageösen ausgebildet sein, die an den zweiten Halteelementen beispielsweise befestigt oder mit diesen einstückig ausgebildet sind.

An den zweiten Halteelementen können weiterhin Griffstücke zum Ergreifen der zweiten Halteelemente vorgesehen sein. So können beispielsweise auf der geschlossenen Seite der Haken Griffstücke vorgesehen sein, welche im Prinzip eine Verlängerung der in etwa V- oder U-förmig ausgebildeten Teile der Haken darstellen. Die Griffstücke können beispielsweise dazu dienen, die erfindungsgemäße Anordnung über die Haken beispielsweise mit den Händen leichter zu greifen.

Die ersten Halteelemente der Befestigungsmittel sind vorzugsweise aus der Gruppe ausgewählt, umfassend Ösen, Schlaufen, Laschen, Klemmen, Haken und Ringe. Besonders bevorzugt ist es jedoch, wenn die ersten Halteelemente, beispielsweise bei zwei oder mehreren benachbarten Befestigungsmitteln, so ausgebildet sind, dass sie zusammen einen schlauchartigen Halter bilden, wobei der Halter vorzugsweise aus einem transparenten Material besteht. Vorzugsweise befindet sich das Lichtsystem in dem schlauchartigen Halter. Durch den schlauchartigen Halter kann das Lichtsystem gegen mechanische Beschädigung geschützt werden. Daneben wird das Lichtsystem durch den Schlauch konstruktiv verstärkt und weist so eine höhere Stabilität auf, wodurch ein Durchhängen des Lichtsystems zwischen zwei zweiten Halteelementen reduziert wird.

Die ersten Halteelemente sind vorzugsweise mit einem nicht leitenden Material isoliert oder bestehen aus einem nicht leitenden Material, um einen Stromübergang vom Fahrdraht auf das Lichtsystem zu verhindern.

Besteht der schlauchartige, transparente Halter zusätzlich aus einem nicht leitenden Material, kann dieser Halter das Lichtsystem auch vor Schäden infolge von Überspannung schützen.

In einer besonderen Ausführungsform der Anordnung können den ersten Halteelementen ein Spannseil, Spannseilbefestigungselemente und mindestens eine Spannvorrichtung zum Spannen des Spannseils zugeordnet sein. Das Spannseil kann, wenn die ersten Halteelemente beispielsweise Ösen oder Schlaufen sind, durch diese hindurchgeführt werden. Vorzugsweise sind die ersten Halteelemente jedoch zusammen als schlauchartiger Halter ausgebildet und das Spannseil in dem schlauchartigen Halter integriert. Der schlauchartige Halter besteht in dieser Ausführungsform vorzugsweise aus einem flexiblen und transparenten Material, beispielsweise einem netzartigen Material aus Kunststoff, wobei sich das Lichtsystem wie das Spannseil der Länge nach im schlauchartigen Halter erstreckt.

Das Spannseil besteht vorzugsweise ebenfalls aus einem nicht leitenden Material. Besonders bevorzugt sind dabei Materialen, wie Kunststoffe, welche z.B. auf Nylon- oder PVC-Gemischen basieren, und Zusammensetzungen, welche Kohlefasern enthalten.

Zum Spannen des Spannseils werden die Spannseilbefestigungselemente und die mindestens eine Spannvorrichtung verwendet. Die Spannseilbefestigungselemente können beispielsweise an den Enden des Spannseils oder dazwischen am Spannseil befindlich, z.B. als Befestigungsösen oder Befestigungsschlaufen, vorgesehen sein. An diese Spannseilbefestigungselemente können dann beispielsweise jeweils die Spannvorrichtungen zum Spannen des Spannseils, beispielsweise Ratschen, angebracht werden. Diese Spannvorrichtungen sind dabei ihrerseits wiederum an z.B. Pfeilern, Wänden oder Masten, beispielsweise an den Oberleitungstragmasten, befestigt.

Durch das gespannte Spannseil kann auf der einen Seite ein Durchhängen des Lichtsystems zwischen den Befestigungselementen vermieden werden. Auf der anderen Seite kann durch das Spannen des Spannseils ein zu starkes Schwanken der Anordnung, beispielsweise durch starken Seitenwind, reduziert werden. Ein weiterer Vorteil der Verwendung einer spannbaren Anordnung liegt darin, dass der Fahrdraht, an dem die erfindungsgemäße Anordnung beispielsweise befestigt ist, hinsichtlich des Gewichtes der Anordnung auf Grund der zusätzlichen Aufhängung durch die Spannvorrichtung, z.B. an Oberleitungstragmasten, entlastet wird. Die auftretenden Spannkräfte liegen dabei in einem zu vernachlässigenden Bereich im Verhältnis zu den ohnehin auf die Oberleitungstragmasten wirkenden Kräften, so dass die Standsicherheit der Oberleitungstragmasten nicht beeinträchtigt wird.

Die Verwendung von Spannseilen ist insbesondere bei den oben beschriebenen Varianten der Anbringung der erfindungsgemäßen Anordnung vorteilhaft, bei denen die Anordnung quer zur Richtung der parallel zueinander verlaufenden Fahrdrähte angebracht wird. So kann das in den ersten Halteelementen integrierte Spannseil mit den Spannseilbefestigungselementen beispielsweise an den Stellen verbunden sein, an denen die zweiten Halteelemente die Anordnung jeweils mit dem letzten, außen liegenden Fahrdraht der parallel zueinander verlaufenden Fahrdrähte verbunden haben. Das Spannseil kann dann über die Spannseilbefestigungselemente mittels der Spannvorrichtung, welche beispielsweise an extra zu errichtenden Masten oder vorhandenen Konstruktionen, z.B. an Haken an Bahnhofswänden angebracht ist, gespannt werden.
Bei der Variante der Anbringung der erfindungsgemäßen Anordnung, bei der diese quer zur Richtung der parallel zueinander verlaufenden Fahrdrähte mehrfach hin und zurück verlegt wird, kann das Spannseil mehrere Spannseilbefestigungselemente und Spannvorrichtungen umfassen, wobei das Spannseil, wie in der vorhergehenden Variante beschrieben, jeweils an den Stellen gespannt wird, an denen die zweiten Halteelemente die Anordnung jeweils mit dem letzten, außen liegenden Fahrdraht der parallel zueinander verlaufenden Fahrdrähte verbunden haben.

Zur Installation der Anordnung, beispielsweise quer über mehrere parallel zueinander verlaufende Fahrdrähte hinweg, kann die Anordnung mittels der Montageöse mit Hilfe von langen, isolierten Stangen, ähnlich denen der so genannten Spannungsprüfer, an denen beispielsweise Haken oder Greifer angebracht sind, aufgenommen werden und mittels der zweiten Halteelemente so an den Fahrdraht, beispielsweise direkt vom Erdboden oder von einem Drehkran aus, wie er bei der Installation von Fahrdrähten eingesetzt wird, angehängt werden. Dabei kann die Anordnung von einer Person unter Verwendung der isolierten Stange von der einen Seite des Fahrdrahtes aus an eine zweite Person mit einer isolierten Stange auf der anderen Seite des Fahrdrahtes übergeben werden. Entsprechend der Anzahl der Fahrdrähte wird die Installation wiederholt.

Für das Lichtsystem, vorzugsweise eine Lichterkette, welche auf der Glühlampentechnik oder Leuchtdiodentechnik basiert, kann als Lichtfarbe jede beliebige Farbe, einschließlich "weiß", verwendet werden. Vorzugsweise richtet sich die Farbe der Lichter der Lichterkette nach den Vorschriften des Bahnunternehmens, beispielsweise der Deutsche Bahn AG, wonach beispielsweise "Weißlicht" verwendet wird.

Wird das Lichtsystem auch zum Anzeigen des Betriebszustandes des Fahrdrahtes verwendet, können die Lichter der Lichterkette verschiedene Lichtsignale aussenden, beispielsweise in einen blinkenden Zustand geschaltet werden, wenn sich der Fahrdraht im spannungslosen Zustand befindet. Dem entsprechend können die Lichter der Lichterkette durchgehend leuchtend geschaltet werden, wenn sich der Fahrdraht im spannungsführenden Zustand befindet, d.h. die Oberleitung eingeschaltet ist. Ebenso können die verschiedenen Betriebszustände des Fahrdrahtes auch durch die Verwendung verschiedener Farben, welche gegebenenfalls auch wieder blinkend oder nicht blinkend verwendet werden, angezeigt werden. So könnte beispielsweise der spannungslose Betriebszustand durch die Verwendung eines gelben durchgehend leuchtenden Lichtes und der spannungsführende Betriebszustand durch die Verwendung eines blinkenden roten Lichtes angezeigt werden. Weiterhin ist auch die Verwendung von mehrfarbigen oder einfarbigen Lauflichtern möglich.

In einer besonderen Ausführungsform der Anordnung können zusätzlich zum Lichtsystem zum Anzeigen des Betriebszustandes der Fahrdrähte akustische Signalgeber vorhanden sein, welche unabhängig vom Lichtsystem von der Steuerzentrale angesteuert werden können.

Das Lichtsystem ist vorzugsweise von einem nicht leitenden Material umgeben, wodurch es insbesondere gegen Überspannung, aber auch gegen Feuchtigkeit geschützt ist. Hierbei kann es sich beispielsweise um den schlauchartigen Halter handeln.

Die Länge des Lichtsystems kann beispielsweise 1 bis 30 m betragen. Um auch Arbeiten an längeren Strecken entlang von Fahrdrähten oder quer zu diesen zu ermöglichen, kann die erfindungsgemäße Anordnung so ausgebildet sein, dass sie mit weiteren zusätzlichen Lichtsystemen der beschriebenen Art kombinierbar ist. So kann das Lichtsystem der erfindungsgemäßen Anordnung beispielsweise durch Steckverbinder mit dem zusätzlichen Lichtsystem elektrisch verbunden werden, wobei die Lichtsysteme von der Steuerzentrale dann entweder einzeln oder gemeinsam angesteuert werden können.

Das Lichtsystem ist so ausgebildet, dass es in mindestens zwei funktionelle Abschnitte unterteilt werden kann. Die einzelnen Abschnitte können dabei unabhängig voneinander von der Steuerzentrale angesteuert werden. Die Länge der einzelnen Abschnitte kann flexibel gestaltet werden. Beispielsweise kann die Länge 1 bis 30 m betragen. Gegebenenfalls kann ein Abschnitt aber auch eine längere Strecke definieren, beispielsweise in dem Fall, wenn mehrere Lichtsysteme miteinander verbunden sind. So kann sich die Länge eines Abschnitts dann beispielsweise über 1,5; 2 oder mehr Lichtsysteme im Rahmen der erfindungsgemäßen Anordnung erstrecken.

Durch die Unterteilung in Abschnitte ist es möglich, dass die einzelnen Abschnitte beispielsweise in dem Fall, in dem die erfindungsgemäße Anordnung quer zu den Fahrdrähten angebracht wird, sowohl spannungslose als auch spannungsführende Fahrdrähte entsprechend ihrem Betriebszustand signalisieren können. Vorzugsweise haben die Abschnitte hier eine Länge von 1 bis 10 m, besonders bevorzugt 2 m.

In dem Fall, in dem die Anordnung beispielsweise entlang eines Fahrdrahtes angebracht und dieser beispielsweise nur bis zu einem bestimmten Punkt spannungsführend ist, können auch hier die Abschnitte des Lichtsystems entsprechend den spannungsführenden und stromlosen Bereichen des Fahrdrahtes durch die Steuerzentrale angesteuert und angezeigt werden.

Die Steuerzentrale der erfindungsgemäßen Anordnung kann direkt oder über Funk, beispielsweise durch einen ausgebildeten Bahnerder (z.B. entsprechend den Richtlinien der Deutschen Bahn), bedient und damit angesteuert werden.

Die Steuerzentrale kann auch den Betriebszustand der Fahrdrähte überwachen und beispielsweise mittels des Lichtsystems anzeigen. Hierzu kann sie ein von einem Spannungsschaltwerk, welches für die Ein- bzw. Ausschaltung der Spannung von Fahrdrahtabschnitten im Fahrdrahtnetz verantwortlich ist, übermitteltes Signal erhalten, so dass das Lichtsystem ohne manuelles Zutun einer Bedienperson selbsttätig angesteuert und die Lichtfunktionen (z.B. Blink-, Dauerlicht, Erlöschen, Farbwechsel) beispielsweise zur Anzeige des Betriebszustandes des Fahrdrahtes automatisch hergestellt werden. Außerdem kann die Spannung in den Fahrdrähten auch gemessen werden, um so einen veränderten Betriebszustand des Fahrdrahtes zu erkennen und zu melden. Der bestehende Betriebszustand kann dann beispielsweise durch die oben beschriebenen Lichtsignale und/oder durch zusätzliche akustische Signale anzeigt werden.

Zur Messung bzw. Überwachung des Betriebszustandes des Fahrdrahtes sind verschiedene Methoden denkbar. Zum einen kann der Betriebszustand des Fahrdrahtes durch Messen einer eventuell anliegenden Spannung direkt, z.B. mittels eines Spannungsmessers, überwacht werden. Dabei misst der Spannungsmesser, ob eine Spannung anliegt, und zeigt dieses der Steuerzentrale an. Der Betriebszustand des Fahrdrahtes kann aber beispielsweise auch durch eine indirekte Messung der Spannung überwacht werden. Hierbei kann eine Messvorrichtung, umfassend mindestens eine Induktionsspule, verwendet werden, welche das sich um einen spannungsführenden Fahrdraht ausbildende Magnetfeld nutzt. Dabei wird die Induktionsspule der Messvorrichtung in unmittelbarer Nähe zum spannungsführenden Fahrdraht angeordnet, wobei die Spule in bekannter Weise so ausgerichtet ist, dass das den spannungsführenden Fahrdraht umschließende, sich aufgrund einer anliegenden Spannung (Gleich- oder Wechselspannung) aufbauende oder sich ständig ändernde Magnetfeld in der Spule einen mindestens kurzen Induktionsstrom erzeugt, welcher signalisiert, dass der Fahrdraht nun spannungsführend ist. Dieses Signal wird dann an die Steuerzentrale übermittelt.

Sowohl das Lichtsystem als auch die Steuerzentrale werden durch die Stromversorgungseinheit mit Strom versorgt. Wahlweise können die Steuerzentrale und das Lichtsystem auch von einer anderen, alternativen Stromquelle versorgt oder unterstützt werden, um die Stromversorgungseinheit zu schonen. Dabei muss jedoch sichergestellt werden, dass die Steuerzentrale und das Lichtsystem für den Fall einer Stromunterbrechung der alternativen Stromversorgung sofort wieder Strom durch die Stromversorgungseinheit erhalten. Ein Ausfall der alternativen Stromversorgung wird darüber hinaus angezeigt. Dieses System kann so als so genanntes Fail-Safe-System verwendet werden.

Die Stromversorgungseinheit ist vorzugsweise eine unabhängige Stromquelle. Derartige Stromquellen sind beispielsweise Notstromaggregate, z.B. auf Diesel-Basis, Brennstoffzellen und/oder geeignete Akkumulatoren und/oder Induktionsspulensysteme.

In einer besonderen Ausführungsform der Stromversorgung kann diese als Spulensystem ausgebildet sein. Dabei wird dieses System in unmittelbarer Nähe zu einem spannungsführenden und zwar Wechselspannung führenden Fahrdraht angeordnet, wobei das Spulensystem in bekannter Weise so ausgerichtet ist, dass das den spannungsführenden Fahrdraht umschließende, sich aufgrund der Wechselspannung ständig ändernde Magnetfeld in den Spulen einen Induktionsstrom erzeugt, welcher zur Versorgung des Lichtsystems und der Steuerzentrale verwendet werden kann.

Die Erfindung wird nachfolgend anhand der Figuren näher erläutert.

Es zeigen die
- Fig.1: eine schematische Darstellung einer typischen Baustellensituation in einem mehrgleisigen Bahnabschnitt;
- Fig. 2: einen Teil der erfindungsgemäßen Anordnung mit Lichtsystem und Befestigungsmittel parallel zu einem Fahrdraht im Querschnitt (Fig. 2a) bzw. Längsschnitt (Fig. 2b).

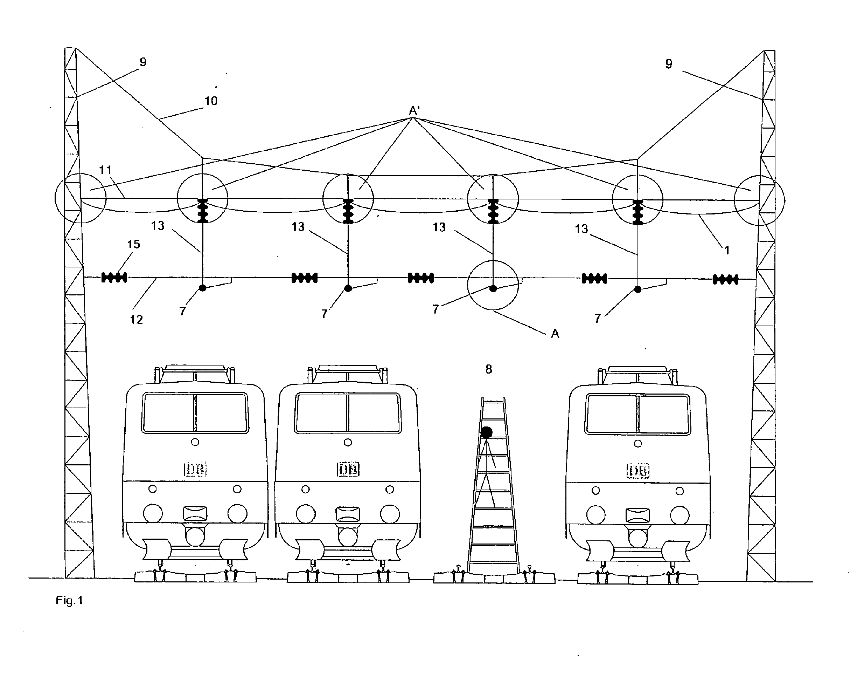

In der Fig. 1 ist eine schematische Darstellung einer typischen Baustellensituation in einem mehrgleisigen Bahnabschnitt gezeigt. Der Bahnabschnitt besteht aus vier nebeneinander liegenden Bahngleisen, auf denen drei elektrische Eisenbahnen stehen. Zwischen zwei Eisenbahnen ist an einem Gleis ein Arbeitsbereich 8, bestehend aus einer Leiter und einer Person, dargestellt. Oberhalb der Bahnen und des Arbeitsbereiches 8 ist eine Oberleitungsanlage abgebildet. Diese Oberleitungsanlage besteht im Wesentlichen aus mehreren parallel zueinander verlaufenden Fahrdrähten 7, entsprechend der Anzahl der Gleise, welche mehrfach über Trag- 10 und Richtseile 11, 12 sowie Isolatoren 15 an den Oberleitungstragmasten 9 befestigt sind. Dabei verlaufen quer zu den Fahrdrähten 7 ein oberes Richtseil 11 und ein unteres Richtseil 12, welche jeweils mit ihren Enden an den Oberleitungstragmasten 9 befestigt und mit verschiedenen Verbindungsseilen 13 miteinander verbunden sind. Diese Seile dienen zum Ausrichten der Fahrdrähte. Die Fahrtdrähte 7 werden über die Verbindungsseile 13 von einem Quertragseil 10 gehalten, welches ebenfalls an den Oberleitungstragmasten befestigt ist. Die erfindungsgemäße Anordnung kann mittels der zweiten Halteelemente oberhalb des Arbeitsbereiches 8 entlang des Fahrdrahtes 7 am Fahrdraht in dem mit A gekennzeichneten kreisförmigen Bereich angebracht werden. Weiterhin kann eine erfindungsgemäße Anordnung auch quer zu den zueinander parallel verlaufenden Fahrdrähten am oberen Richtseil 11 in den mit A' gekennzeichneten kreisförmigen Bereichen mittels der zweiten Halteelemente angebracht werden, wobei der Verlauf der erfindungsgemäßen Anordnung durch das Lichtsystem 1 angedeutet ist. Es versteht sich, dass die zweiten Halteelemente die Anordnung auch zwischen den und/oder zusätzlich zu den mit A' gekennzeichneten Bereichen mit dem oberen Richtseil 11 lösbar verbinden können (nicht gezeigt). Die Anordnung könnte auch am unteren Richtseil 12 oder am Quertragseil 10 angebracht werden (nicht gezeigt). Die Anordnung kann an ihren Enden, wenn sie quer zu den Fahrdrähten angebracht wird, beispielsweise auch an den Tragmasten 9 befestigt werden (nicht gezeigt), wenn der Anordnung beispielsweise ein Spannseil, Spannseilbefestigungselemente und mindestens eine Spannvorrichtung zugeordnet sind. Die Befestigung der erfindungsgemäßen Anordnung am oberen Richtseil ermöglicht eine Zugdurchfahrt, ohne dass die Anordnung zuvor entfernt werden muss.

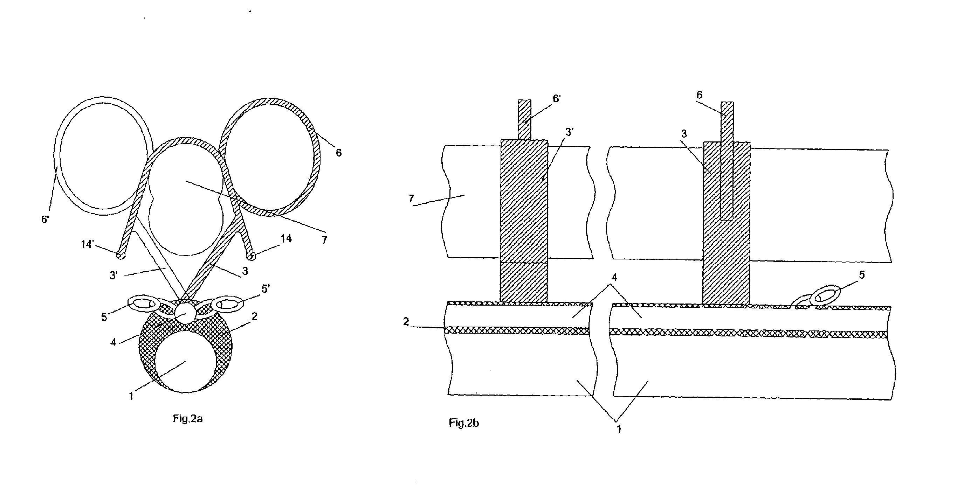

In der Fig. 2 wird ein Teil der erfindungsgemäßen Anordnung mit Lichtsystem 1 und Befestigungsmitteln parallel zu einem Fahrdraht 7 im Querschnitt (Fig. 2a) bzw. Längsschnitt (Fig. 2b) dargestellt. Zum besseren Verständnis sind beide Figuren nebeneinander dargestellt. Dabei werden das Lichtsystem 1, zwei Befestigungsmittel, umfassend erste Halteelemente 2 und zweite Halteelemente 3 und 3', dargestellt. Die ersten Halteelemente 2 sind zusammen als schlauchartiger Halter 2 ausgebildet, bestehend aus einem netzartigen Gewebe, in welchem ein Spannseil 4 mit zwei Spannseilbefestigungselementen 5, 5' integriert ist. Die Spannseilbefestigungselemente sind als Befestigungsösen 5, 5' an den Enden des Spannseils 4 befestigt. An den Befestigungsösen 5, 5' kann die Spannvorrichtung angebracht werden (nicht dargestellt). Die zweiten Halteelemente 3, 3' sind als Haken ausgebildet, welche zum senkrechten Anhängen an den Fahrdraht 7 verwendet werden. An den zweiten Halteelementen sind jeweils Montageösen 6, 6' vorgesehen, welche zum Anbringen der Anordnung an den Fahrdraht verwendet werden können.

In der Fig. 2a sind der Haken 3, der schlauchartige Halter 2, das Spannseil 4, das Spannseilbefestigungselement 5, 5' sowie das Lichtsystem 1 parallel zum Fahrdraht 7 im Querschnitt dargestellt. Der Haken 3' folgt, in Richtung des Fahrdrahtes 7 gesehen, auf den Haken 3 und ist dabei teilweise von diesem verdeckt. Die Haken 3 und 3' sind mit ihren jeweilige Öffnungen bildenden Seiten zueinander entgegengesetzt ausgerichtet, so dass sie den Fahrdraht 7 wechselseitig von der einen beziehungsweise von der anderen Seite über ihre Öffnungen aufnehmen. Dabei passt der Fahrdraht bei gutem Sitz sehr genau in die in etwa V-förmig ausgebildeten Teile der Haken 3, 3', wobei die Enden der Haken auf der offenen Seite etwas über den Querschnitt des Fahrdrahtes nach unten hinausragen und so ein ungewolltes Herausrutschen des Fahrdrahtes aus dem gebogenen Teil des Hakens verhindern. Auf der geschlossenen Seite der Haken 3, 3' sind Griffstücke 14 und 14' zu sehen, welche im Prinzip eine Verlängerung der in etwa V-förmig ausgebildeten Teile der Haken 3, 3' auf dieser Seite darstellen. Die Griffstücke 14, 14' können beispielsweise dazu dienen, die erfindungsgemäße Anordnung an den Haken beispielsweise mit den Händen oder einem Handhabungsgerät leichter zu greifen.

In Fig. 2b sind die Haken 3, 3' mit den Montageösen 6, 6', wobei die Haken 3, 3' in den Fahrdraht 7 eingehängt sind, in einer Seitenansicht dargestellt. Dabei befindet sich die die Öffnung bildende Seite des Hakens 3 hinter der Figurenebene. Über diese Öffnung wird der Fahrdraht 7 aufgenommen. Dadurch sind nur die geschlossene Seite des Hakens 3 sowie die Montageöse 6 sichtbar und der Fahrdraht 7 durch die geschlossene Seite des Hakens 3 verdeckt. Die die Öffnung bildende Seite des Hakens 3' ist sichtbar, wobei nun diese Seite des Hakens 3' den Fahrdraht 7 verdeckt. Weiterhin ist die Montageöse 6' zu sehen. Neben dem Haken 3 ist die Befestigungsöse 5 dargestellt.

Bezugszeichenliste:
- 1: Lichtsystem
- 2: erstes Halteelement, schlauchartiger Halter
- 3: zweites Halteelement, Haken
- 4: Spannseil
- 5, 5': Spannseilbefestigungselement, Befestigungsöse
- 6, 6': Montage-Hilfsmittel, Montageöse
- 7: Fahrdraht
- 8: Arbeitsbereich
- 9: Oberleitungstragmast
- 10: Tragseil, Quertragseil
- 11: oberes Richtseil
- 12: unteres Richtseil
- 13: Verbindungsseil
- 14, 14': Griffstück
- 15: Isolator
- A, A': Bereich zur Anbringung der erfindungsgemäßen Anordnung bzw. zum Anbringung der zweiten Halteelemente

## Patentansprüche

1. Anordnung zur optischen Warnung vor Fahrdrähten, umfassend
a) ein Lichtsystem (1) zum Anzeigen der Position und/oder des Betriebszustandes der Fahrdrähte (7),
b) mindestens ein Befestigungsmittel für das Lichtsystem (1),
c) eine Steuerzentrale zum Ansteuern des Lichtsystems und gegebenenfalls Überwachen des Betriebszustandes der Fahrdrähte (7) und
d) eine Stromversorgungseinheit,
**dadurch gekennzeichnet, dass** das mindestens eine Befestigungsmittel erste Halteelemente (2) zum Halten des Lichtsystems (1) und zweite Halteelemente (3, 3'), über die die Anordnung mit den Fahrdrähten (7) oder mit den Fahrdrähten (7) zugeordneten Tragseilen (10) oder Richtseilen (11, 12) lösbar verbunden werden kann, umfasst.

2. Anordnung nach Anspruch 1, **dadurch gekennzeichnet, dass** die ersten Halteelemente (2) aus der Gruppe ausgewählt sind, umfassend Ösen, Schlaufen, Laschen, Klemmen, Haken und Ringe, oder dass die ersten Halteelemente (2) so ausgebildet sind, dass sie zusammen einen schlauchartigen Halter bilden.

3. Anordnung nach einem der vorstehenden Ansprüche, **dadurch gekennzeichnet, dass** den ersten Halteelementen (2) ein Spannseil (4), Spannseilbefestigungselemente (5) und mindestens eine Spannvorrichtung zugeordnet sind.

4. Anordnung nach Anspruch 4, **dadurch gekennzeichnet, dass** das Spannseil (4) über die Spannseilbefestigungselemente (5) mittels der mindestens einen Spannvorrichtung an Oberleitungstragmasten (9) spannbar ist.

5. Anordnung nach einem der Ansprüche 4 oder 5, **dadurch gekennzeichnet, dass** das Spannseil (4) in einem schlauchartigen Halter (2) integriert ist, der durch die ersten Halteelemente gebildet wird..

6. Anordnung nach einem der Ansprüche 2 - 5, **dadurch gekennzeichnet, dass** der schlauchartige Halter aus einem flexiblen und transparenten Material besteht und sich das Lichtsystem (1) der Länge nach im schlauchartigen Halter erstreckt.

7. Anordnung nach einem der vorstehenden Ansprüche, **dadurch gekennzeichnet, dass** die zweiten Halteelemente (3, 3') Haken sind, welche mit einem nicht leitenden Material isoliert sind oder aus einem nicht leitenden Material bestehen.

8. Anordnung nach Anspruch 7, **dadurch gekennzeichnet, dass** die Haken einen im Wesentlichen V-förmig ausgebildeten Teil zum Aufnehmen des Fahrdrahtes (7) oder des Trag- oder Richtseils (10, 11, 12) aufweisen.

9. Anordnung nach einem der Ansprüche 7 oder 8, **dadurch gekennzeichnet, dass** die Haken Öffnungen zum Aufnehmen des Fahrdrahtes (7) oder des Trag- oder Richtseils (10, 11, 12) aufweisen und dass diese Öffnungen an aufeinander folgenden Haken zueinander entgegengesetzt ausgerichtet sind, so dass sie den Fahrdraht (7) oder das Trag- oder Richtseil (10, 11, 12) wechselseitig von der einen beziehungsweise von der anderen Seite übergreifen können.

10. Anordnung nach einem der vorstehenden Ansprüche, **dadurch gekennzeichnet, dass** den zweiten Halteelementen (3, 3') Montage-Hilfsmittel (6) zur Montage der zweiten Halteelemente am Fahrdraht (7) oder an dem Trag- oder Richtseil (10, 11, 12) zugeordnet sind.

11. Anordnung nach einem der vorstehenden Ansprüche, **dadurch gekennzeichnet, dass** an den zweiten Halteelementen (3, 3') Griffstücke (14, 14') zum Ergreifen der zweiten Halteelemente (3, 3') vorgesehen sind.

12. Anordnung nach einem der vorstehenden Ansprüche, **dadurch gekennzeichnet, dass** die zweiten Halteelemente (3) bei parallel zueinander verlaufenden Fahrdrähten (7) quer zur Richtung dieser Fahrdrähte oder in Richtung der Fahrdrähte mit diesen verbindbar sind.

13. Anordnung nach einem der vorstehenden Ansprüche 3 - 12, **dadurch gekennzeichnet, dass** das Spannseil (4) aus einem nicht leitenden Material besteht.

14. Anordnung nach Anspruch 13, **dadurch gekennzeichnet, dass** das nicht leitende Material aus der Gruppe ausgewählt ist, umfassend Kunststoffe und Kohlefasern.

15. Anordnung nach einem der vorstehenden Ansprüche, **dadurch gekennzeichnet, dass** das Lichtsystem in mindestens zwei Abschnitte unterteilbar ist.

16. Anordnung nach Anspruch 15, **dadurch gekennzeichnet, dass** die Abschnitte jeweils eine Länge von 1 bis 10 m haben.

17. Anordnung nach Anspruch 15 oder 16, **dadurch gekennzeichnet, dass** die Abschnitte unabhängig voneinander von der Steuerzentrale ansteuerbar sind.
